# EUROPÄISCHE PATENTSCHRIFT

(11) **EP 0 306 695 B1**
(45) Veröffentlichungstag und Bekanntmachung des Hinweises auf die Patenterteilung: **06.10.1993**
(21) Anmeldenummer: 88112271.7
(22) Anmeldetag: 29.07.1988
(51) Int. Cl.: F23G 7/06, F23L 15/04, F27B 9/36, F27B 9/40, F27D 17/00, F26B 23/02, C21D 9/00

(54) **Heissgaserzeugungseinrichtung mit thermischer Nachverbrennung**
Hot gas generating device using thermal afterburning
Dispositif de génération de gaz chaud avec postcombustion thermique

(30) Priorität: 08.09.1987 DE 3729971
(43) Veröffentlichungstag der Anmeldung: 15.03.1989
(73) Patentinhaber: WS Wärmeprozesstechnik GmbH, D-71272 Renningen (DE)
(72) Erfinder: Wünning, Joachim, Dr.-Ing., D-7250 Leonberg (DE)
(74) Vertreter: Rüger, Rudolf, Dr.-Ing.

(56) Entgegenhaltungen:
- AU-A- 424 316
- DE-A- 2 616 347
- FR-A- 2 090 780
- FR-A- 2 305 704
- FR-A- 2 370 248
- GB-A- 2 186 670
- US-A- 4 548 651

## Beschreibung

Die Erfindung betrifft eine Heißgaserzeugungseinrichtung für wenigstens einen Wärmeverbraucher, der eine Prozeßkammer zur Durchführung von thermischen Prozessen aufweist, bei denen gas-, dampf- oder partikelförmige organische Schadstoffe enthaltendes Abgas anfällt.

Bei vielen Industrieprozessen und -anlagen, z.B. Trocknungs- und Imprägnieranlagen, bei der Teer- und Asphaltverarbeitung, der Futtermittelherstellung, oder beim Betrieb von Industrieöfen, z.B. als Teil von Härteanlagen oder als Ausbrennöfen, können unerwünschte gas-, dampf- oder partikelförmige Emissionen organischer Stoffe auftreten, die auf unterschiedliche Weise, z.B. durch Filter, in Abscheid- oder Waschanlagen, katalytischen oder thermischen Nachverbrennungsanlagen teilweise oder vollständig unschädlich gemacht werden können.

Wenn für die in den Abgasen enthaltenen Schadstoffe wegen zu geringer Konzentration oder aus anderen Gründen eine Rückgewinnung ausscheidet, werden diese Schadstoffe häufig durch thermische Verbrennung in unschädliche Stoffe, insbesondere Kohlendioxid und Wasser umgesetzt. Für ein vollständiges Ablaufen der Reaktion ist es notwendig, eine Reaktionstemperatur von etwa 600° - 800° C, eine Mindestverweilzeit in der Reaktionskammer von 0,6 s (abhängig u.a. von der Art und der Konzentration der Schadstoffe) und eine hinreichende Durchmischung der zu oxidierenden Schadstoffe mit den heißen sauerstoffhaltigen Verbrennungsgasen zu gewährleisten. Bei optimaler Einstellung der Prozeßparameter ist ein Umsetzungsgrad von 99% und mehr erreichbar. (Siehe z.B. T.H. Zimmer: "Energiesparen durch thermische Nachverbrennung" in Industrie anzeiger 102. Jg. Nr. 8 vom 30. 1. 1980.)

Aus dem Aufsatz von H.B.Ricke: "Thermische Nachverbrennung mit Erdgasbeheizung an Härteanlagen" in Gas wärme international, 33 (1984) Nr. 9, ist eine Nachverbrennungseinrichtung für einen Industrieofen bekannt, die eine an die Ofenkammer angeschlossene Nachverbrennungskammer aufweist, die - zusätzlich zu den zur Beheizung der Ofenkammer in dieser vorhandenen Brennern - mit einem eigenen Nachverbrenner ausgestattet ist. Diese Einrichtung arbeitet mit Rohgasvorwärmung durch das aus der Nachverbrennungskammer austretende Reingas, was bedeutet, daß die schadstoffbeladenen Rohgase sekundärseitig durch einen Wärmetauscher hindurchgeführt werden. Das birgt die Gefahr in sich, daß die engen Kanäle des Wärmetauschers durch Schadstoffablagerungen, z.B. Ruß verstopft werden. Die in der Nachverbrennungskammer bei der Verbrennung des Rohgases freiwerdende Energie wird nur zum einen Teil zur Rohgasvorwärmung verwendet. Der andere Teil wird mit den Reingasen in die Prozeßkammer des Industrieofens zurückgeführt. Durch den Abzug des Industrieofens kann dabei aber sowohl Reingas als auch schadstoffbeladenes Rohgas ins Freie gelangen, so daß die nach außen gelangenden Gase nicht vollständig von nachverbrennbaren Schadstoffen befreit sind.

Die VDI-Richtlinie 2442 "Abgasreinigung durch thermische Verbrennung" vom Juni 1987 fordert für das Verfahren der thermischen Nachverbrennung den Wärmeinhalt des Reingases, soweit dies wirtschaftlich durchführbar ist, über Wärmetauscher zur Vorwärmung des Rohgases und/oder der Verbrennungsluft zu nutzen, falls Luft zugeführt wird. Auf diese Weise soll der Bedarf an Zusatzenergie vermindert werden.

Bei einer aus der FR-A-2305 704 bekannten Heißgaserzeugungseinrichtung für einen Durchlaufofen zum Trocknen und Aushärten von lösungsmittelhaltigen Überzügen auf einem fortlaufend durch die Ofenkammer hindurchgeführten Metallband wird aus der Ofenkammer in einem Bereich maximaler Lösungsmitteldampfkonzentration Rohgas abgesaugt, das über eigene Leitungen in eine neben dem Ofen im Abstand angeordnete Misch- oder Überdruckkammer gefördert wird, die somit Rohgas mit hohem Lösungsmittelanteil enthält. Von dieser Misch- oder Überdruckkammer aus wird dieses unverbrannte Rohgas einerseits auf mehrere, verschiedenen Zonen der Ofenkammer zugeordnete Brennkammern verteilt und andererseits in vorbestimmtem festem Anteil einer weiteren Brennkammer zugeleitet, die mit einem Reingasauslaß in Verbindung steht. In diesen Brennkammern wird das in dem Rohgas enthaltene Lösungsmittel vollständig oxidiert, wozu in allen Brennkammern entsprechende zusätzliche Brenner vorgesehen sind, die mit Erdgas oder einem anderen Brennstoff gespeist werden. Da in der mit dem Reingasauslaß verbundenen weiteren Brennkammer das aus der Mischkammer geförderte, einen sehr hohen Lösemitteldampf-Anteil aufweisende unverbrannte Rohgas vollständig oxidiert werden muß, ist eine eigene Brennereinrichtung für diese Brennkammer erforderlich. Auch ergibt sich insgesamt ein verhältnismäßig hoher Aufwand an Gebläsen und Leitungen für die verschiedenen Gasströme.

Aufgabe der Erfindung ist es nun, eine Heißgaserzeugungseinrichtung mit thermischer Nachverbrennung zu schaffen, die sich bei günstiger Wärmeenergiebilanz durch einen einfachen Aufbau und eine wirtschaftliche, schadunanfällige und umweltfreundliche Betriebsweise auszeichnet.

Zur Lösung dieser Aufgabe weist die erfindungsgemäße Einrichtung die Merkmale des Hauptanspruches auf.

Die thermische Verbrennung wird dabei in zwei Stufen durchgeführt, einer ersten (unvollständigen) Stufe in der Heizkammer und einer zweiten (vervollständigenden) Stufe in der Nachverbrennungskammer. Die Brennereinrichtung der Heizkammer ist im Hinblick auf die Erwärmung der Heißgase entsprechend dem Wärmeverbrauch des Wärmeverbrauchers ausgelegt und treibt gleichzeitig den Heißgaskreislauf durch die Prozeßkammer. Der mit einer eigenen Brennereinrichtung für die Nachverbrennungskammer sowie die dazugehörigen Ansteuerungsvorrichtungen und Betriebsmittelzuführungen verbundene Aufwand entfällt. Der Einsatz von Gebläseeinrichtungen zum Umwälzen oder Absaugen der Heiz- bzw. Rohgase ist in der Regel entbehrlich. Die Heißgaserzeugungseinrichtung gestattet es, einen Wärmeverbraucher mit der von diesem benötigten Prozeßwärme zu versorgen und dabei gleichzeitig ohne größeren zusätzlichen Aufwand an Nachbrennern oder dergl. bei günstiger Wärmebilanz bei dem Wärmeverbraucher prozeßbedingt auftretenden Schadstoffe umweltfreundlich unschädlich zu machen. Sie erlaubt auch eine Nachrüstung bestehender Anlagen.

Vorteilhafte Weiterbildungen der neuen Heißgaserzeugungseinrichtung sind Gegenstand von Unteransprüchen.

In der Zeichnung sind Ausführungsbeispiele des Gegenstandes der Erfindung dargestellt. Es zeigen:
- Fig.1: eine Heißgaserzeugungseinrichtung mit thermischer Nachverbrennung gemäß der Erfindung in einem schematischen Prinzipschaltbild,
- Fig.2: die Heißgaserzeugungseinrichtung mit thermischer Nachverbrennung gemäß des Prinzipschaltbildes nach Fig. 1 in einer ersten Ausführungsform, in schematischer Darstellung in einem Längsschnitt unter teilweiser Veranschaulichung des zugehörigen Wärmeverbrauchers und
- Fig.3: die Heißgaserzeugungseinrichtung mit thermischer Nachverbrennung gemäß des Prinzipschaltbildes nach Fig. 1 in einer in einen Industrieofen integrierte Ausführungsform, in schematischer Darstellung in einem Längsschnitt.

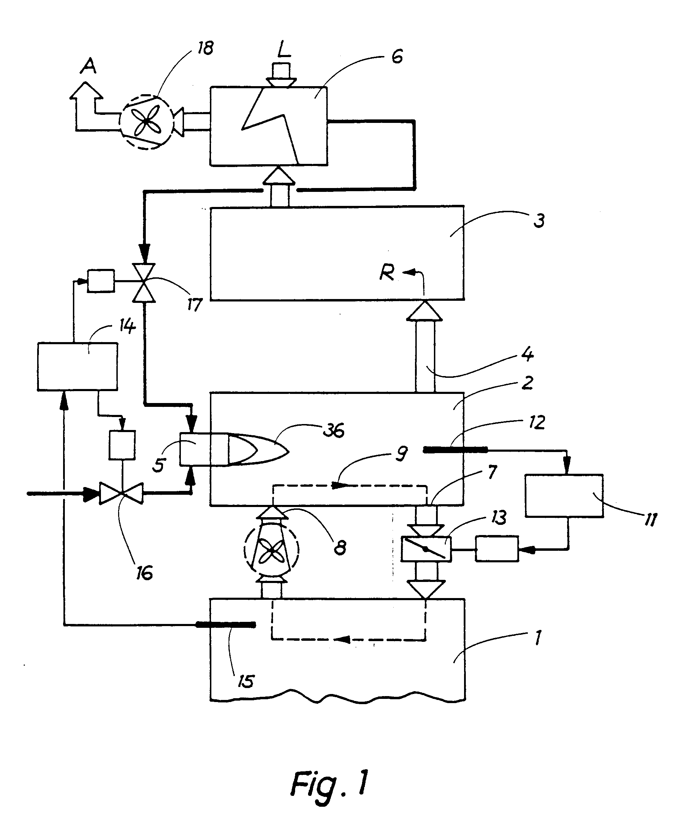

Das Prinzipschaltbild in Fig. 1 veranschaulicht den prinzipiellen Aufbau und die Wirkungsweise einer erfindungsgemäßen Einrichtung. Es zeigt eine Prozeßkammer 1, eine Heizkammer 2 und eine mit dieser über einen Durchlaß 4 verbundene Nachverbrennungskammer 3.

Die Heizkammer 2 ist von einer Brennereinrichtung 5 direkt beheizt, mit ihr ist die Nachverbrennungskammer 3 verbunden, die von aus der Heizkammer 2 austretendem, unvollständig nachverbranntem Rohgas R durchströmt ist. An die Nachverbrennungskammer 3 ist ein Wärmetauscher 6 angeschlossen, der sekundärseitig von der Zuluft L für die Brennereinrichtung 5 durchströmt ist. Die Heizkammer 2 ist über einen Heißgasauslaß 7 und einen Heißgaseinlaß 8 mit der Prozeßkammer 1 verbunden. So ergibt sich für das Heißgas ein durch die Heizkammer 2, den Heißgasauslaß 7, den Heißgaseinlaß 8 und die Prozeßkammer 1 gebildeter Kreislauf 9, in dem mittels des von der Brennereinrichtung 5 erzeugten Brennerimpulses eine vorbestimmte Heißgasmenge umwälzbar ist.

Weiterhin sind Regelmittel 11 vorhanden, durch die wenigstens die Temperatur der unvollständig nachverbrannten Rohgase R bei ihrem Eintritt in die Nachverbrennungskammer 3 auf einen vorbestimmbaren Sollwert gehalten ist. Die Regelmittel 11 weisen als Meßglied einen im Bereiche des Durchlasses 4 angeordneten Temperaturfühler 12 und als Stellglied ein im Bereiche des Heißgasauslasses 7 angeordnetes verstellbares Drosselorgan 13 z.B. in Gestalt einer Drosselklappe auf, mit dem der Strom des Heißgases in dem Kreislauf 9 begrenzbar ist.

Die Brennereinrichtung 5 wird mit Brenngas G und durch den Wärmetauscher vorgewärmter Zuluft L gespeist. Mit einer Regeleinrichtung 14, die ihrerseits als Stellglied einen Temperaturfühler 15 aufweist, sind die Stellorgane 16, 17 für die Brenngaszufuhr bzw. die Luftzufuhr zu der Brennereinrichtung 5 beeinflußbar, mithin auch die Temperatur in der Heizkammer 2. An den primärseitigen Ausgang des Wärmetauschers 6 ist evtl. ein Gebläse 18 (strichliert gezeichnet) angeschlossen, um das nachverbrannte Reingas A aus der Einrichtung abzusaugen. Ein (ebenfalls strichliert gezeichnetes) Gebläse 19 in dem Kreislauf 9 kann, falls bei besonders ungünstigen Strömungsverhältnissen der Brennerimpuls der Brennereinrichtung 5 nicht ausreichend ist, den Kreislauf 9 des Heißgases unterstützen.

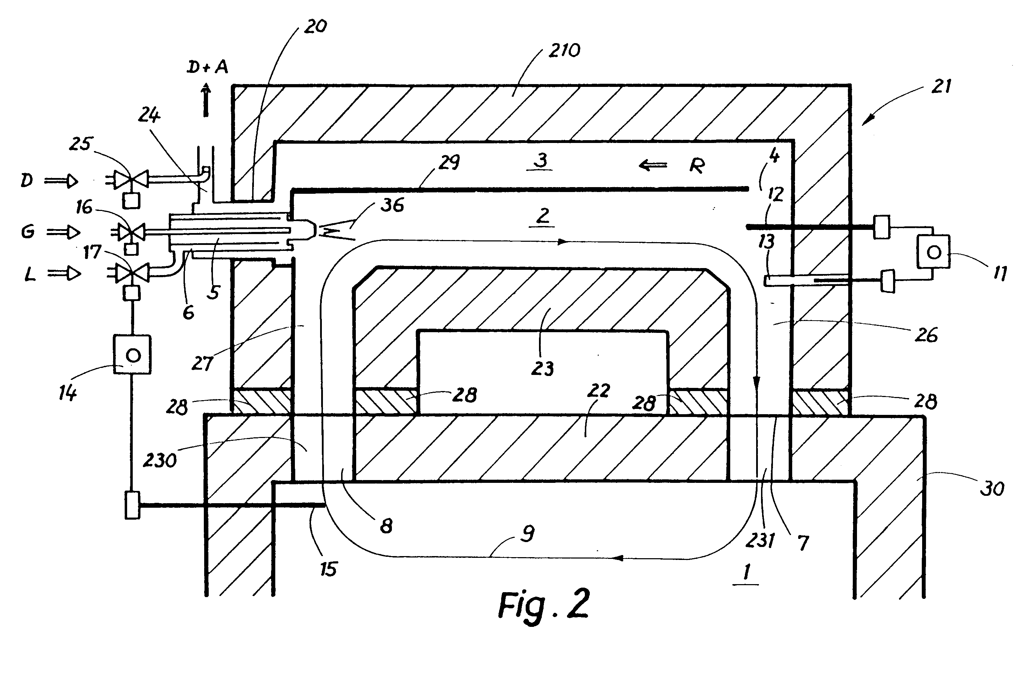

Fig. 2 zeigt eine bevorzugte praktische Ausführungsform der in Fig. 1 schematisch gezeigten Erfindung, bei der die Heizkammer 2 und die Nachverbrennungskammer 3 zu einer eigenen Baueinheit 21 zusammengefasst sind, die auf eine eine Ofenkammer bildende Prozeßkammer 1 begrenzende Wand 22 aufgesetzt ist. Die Prozeßkammer 1 ist Teil eines Industrieofens; sie ist nur angedeutet und im Prinzip ein mit Schamottestein ausgemauerter länglicher Kasten. Die Baueinheit 21 weist ein längliches, im Querschnitt rechteckiges hitzbeständiges Gehäuse 210 auf, in dessen Innern ein im Längsschnitt die Gestalt eines umgekehrten U besitzenden Formstück 23 angeordnet ist. Das Formstück 23 begrenzt zusammen mit den Außenwänden des Gehäuses 210 einen ersten und einen zweiten Kanal 26, 27 für den Stömungsweg des Kreislaufes 9 des Heißgases. Der erste Kanal 26 mündet in dem Heißgasauslaß 7, der zweite Kanal 27 dem Heißgaseinlaß 8 aus Fig. 1. Über hitzebeständige abdichtende Anschlußstücke 28 sind die Kanäle 26, 27 mit Öffnungen 230, 231 in der Wand 22 der Prozeßkammer 1 verbunden.

Die Heizkammer 2 ist durch den Querschenkel des U-förmigen Formstückes 23 und eine sich parallel zu der oberen Wand 22 des Gehäuses 210 erstreckende metallische Trennwand 29 von der Nachverbrennungskammer 3 getrennt. Diese Trennwand 29 weist im Bereich oberhalb des ersten Kanales 26 den Durchlaß 4 auf, durch den das nachzuverbrennende Rohgas R aus der Heizkammer 2 in die Nachverbrennungskammer 3 gelangt. An die längliche Nachverbrennungskammer 3 schließt sich auf der dem Durchlaß 4 gegenüberliegenden Seite der im Zusammenhang mit der Brennereinrichtung 5 näher erläuterte Wärmetauscher 6 an.

Durch eine dem ersten Kanal 26 und dem Durchlaß 4 gegenüberliegenden Öffnung 20 in der Stirnwand des Gehäuses 210 (Fig. 2 links) ragt ein die Brennereinrichtung 5 bildender Rekuperatorbrenner in die Heizkammer 2, dessen Rippenrekuperator den Wärmetauscher 6 bildet. In der Brenngas- und Luftzufuhr zu dem Rekuperatorbrenner sind durch die mittels der Regeleinrichtung 14 beeinflußbare erste Stellorgane 16 und 17 regelbar. Die Regeleinrichtung 14 ihrerseits ist mit dem im Bereiche des Heißgaseinlasses 8 in die Prozeßkammer ragenden Temperaturfühler 15 verbunden. Die dem Rekuperatorbrenner zugeführte Zuluft L wird durch die Sekundärseite des Wärmetauschers 6 geführt, der primärseitig von dem heißen nachverbrannten Reingas A aus der Nachverbrennungskammer 3 durchströmt ist.

Das zugeführte Brenngas G wird mit der so vorgewärmten Zuluft L in der Heizkammer 2 verbrannt, die damit direkt beheizt ist. da der Rekuperatorbrenner der Brennereinrichtung 5 stirnseitig in die länglichen, parallelwandig begrenzten Heizkammer 2 mündet, treibt sein Impuls den Heißgaskreislauf 9, wobei gleichzeitig eine gute Durchmischung der Gase in der Brennkammer 2 erfolgt. Am sekundärseitigen Ausgang des Wärmetauschers 6 ist ein Absaugmittel bildender Eduktor 24 angeordnet. Dieser Eduktor arbeitet nach dem Prinzip einer Luftstrahlpumpe mit Druckluft D, deren Menge durch ein drittes Stellorgan 25 beeinflußbar ist. Weitere Einzelheiten des Rekuperatorbrenners sind z.B. der DE-PS 34 22 229 zu entnehmen.

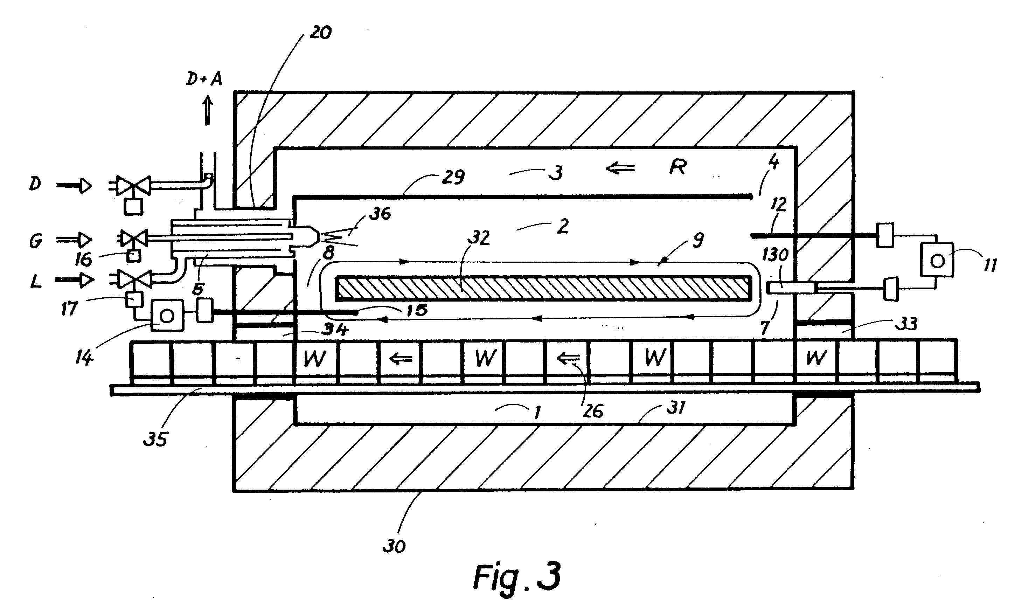

In der Fig. 3 ist die in Fig. 1 schematisch veranschaulichte Einrichtung in einen als Durchlaufofen ausgebildeten Industrieofen integriert. Gegenüber den Ausführungsformen nach Fig. 1 und 2 gleiche Teile sind mit gleichen Bezugszeichen versehen.

Dieser Industrieofen weist ein längliches, ausgemauertes Gehäuse 30 auf, in dessen Innern sich die Prozeßkammer 1, die Heizkammer 2 und die Nachverbrennungskammer 3 befinden.

Die Prozeßkammer 1 ist durch einen parallel zu dem ebenen Ofenboden 31 angeordneten Trennboden 32 aus Schamottestein von der darüberliegenden Heizkammer 2 abgetrennt. Der ebene Trennboden 32 begrenzt mit den beiden Stirnseiten des Gehäuses 30 den Heißgasein-und -auslass 7 bzw. 8 für den Kreislauf 9 des Heißgases. Der Heißgaseinlaß 8 befindet sich im Bereich des in die Öffnnung 20 der einen Stirnwand (in Fig. 3 links) eingesetzten Rekuperatorbrenners der Brennereinrichtung 5; der Heißgasauslaß 7 in einem von diesem entfernt liegenden Bereich an der gegenüberliegenden Stirnwand.

An den beiden Stirnseiten ist das Gehäuse 30 mit einer Einlaßöffnung 33 und einer Auslaßöffnung 34 der Prozeßkammer 1 versehen, durch die Wärmgut W auf einer Fördereinrichtung 35 durch die Prozeßkammer 1 in der durch Pfeile 26 angedeuteten Richtung von rechts nach links hindurchgeführt wird.

Zur Steuerung der Temperatur des Heißgases und des in die Nachverbrennnungskammer 3 eintretenden Rohgases R sind die Regelmittel 11 vorgesehen, deren Meßglied der im Bereiche des Heißgasauslasses 7 bzw. des Durchlasses 4 angeordnete Temperaturfühler 12 ist. Die Regelmittel 11 weisen ein als Stellglied im Bereiche des Heißgasauslasses 7 angeordnetes verstellbares Drosselorgan in Gestalt eines der zugeordneten Gehäusestirnwand gelagerten Schiebers 130 auf, an dessen Stelle auch eine Drosselklappenanordnung Verwendung finden könnte.

Da die übrigen Teile dieser Ausführungsform bereits im Zusammenhang mit den Fig. 1 und 2 erläutert sind, erübrigt sich deren weitere Erklärung an dieser Stelle.

Im Betriebszustand strömen Gas G und Zuluft L im geregelten Ein-Ausbetrieb in den oder die Rekuperatorbrenner der Brennereinrichtung 5 und werden dort gezündet. Der oder die in die Heizkammer 2 mündende Brenner erzeugt bzw. erzeugen einen hohen Brennerimpuls; aus der Mündung austretenden Flammengase weisen eine Austrittsgeschwindigkeit von etwa 100 m/s auf; sie bilden einen bei 36 angedeuteten Flammenstrahl, der sich parallel zu der oberen und unteren Kammerwand in die längliche Heizkammer 2 hineinerstreckt. Durch den Brennerimpuls dieses Flammenstrahles 36 wird der Kreislauf 9 des Heißgases erzeugt. Dabei wird das Wärmgut W in der Prozeßkammer 1 erwärmt, das Heißgas kühlt entsprechend ab. In der Heizkammer 2 bildet sich ein Rohgas R, das aus den aus der Brennermündung austretenden heißen Verbrennungsgasen und den durch den Heißgaseinlaß 8 aus der Prozeßkammer 1 zurückströmenden heißen Verbrennungsgasen zusammen mit den Schadstoffen besteht.

Bei z.B. öl- oder schmierstoffbehaftetem Wärmgut W enstehen nämlich insbesondere bei in der Prozeßkammer 1 herrschenden Prozeßtemperaturen von etwa 100°C bis 700°C in der Prozeßkammer 1 aus nicht vollständig oxidierten Kohlenwasserstoffen bestehende Gase oder Dämpfe, die dann als Schadstoffe zusammen mit dem Heißgas in die Heizkammer 2 gelangen.

Ein Teil dieser Schadstoffe wird bereits in der Heizkammer 2 verbrannt, da die dort herrschenden Temperaturen, Verweilzeiten usw. günstige Bedingungen für die Oxidation der Schadstoffe ergeben, aber nicht ausreichend sind, die Schadstoffe vollständig zu oxidieren. Aus der Heizkammer 2 stömt eine zumindest der durch die Brennereinrichtung 5 zugeführten Verbrennungsgasmenge entsprechende Menge Rohgas R durch den Durchlaß 4 in die Nachverbrennungskammer 3 ein, wo das Rohgas R vollständig nachverbrannt wird, worauf es in den Wärmetauscher 6 gelangt, der bei den Ausführungsformen nach den Fig. 2 und 3 Teil eines Rekuperatorbrenners ist.

Um die für das am Ausgang der Nachverbrennungskammer 3 in die Atmosphäre abgegebene Reingas A vorgeschriebenen Grenzwerte einzuhalten, müssen, abhängig von den organischen Schadstoffbeimischungen in dem in die Nachverbrennungskammer einströmenden Rohgas R typischerweise folgende Verfahrensparameter in der Nachverbrennungskammer 3 eingehalten werden:
- Reaktionstemperatur:: 700°C - 900°C,
- Sauerstoffüberschuß:: 5 - 10 Vol.%,
- Verweilzeit:: 1 - 2 Sekunden bei guter Durchmischung.

Dazu ist es notwendig, am Eingang der Nachverbrennungskammer 3, d.h. im Bereiche des Durchlasses 4 in dem Rohgas R eine Temperatur von etwa 800°C aufrechtzuerhalten. Außerdem ist das wirksame Volumen der Nachverbrennungskammer 3 dabei derart gewählt, daß bei dem durch die von dem Rekuperatorbrenner der Brennereinrichtung 5 abgegebene Brenngasmenge vorgegebenen Gasdurchsatz durch die Nachverbrennungskammer 3 die notwendige Verweilzeit gewährleistet ist.

Die Größe des in dem Kreislauf 9 umgewälzten Mengenstromes des Heißgases hängt von dem Wärmeverbrauch des zur Behandlung des Wärmgutes W in der Ofenkammer 1 ab, für den die Temperaturdifferenz zwischen dem Heißgaseintritt in die und dem Heißgasaustritt aus der Ofenkammer 1 kennzeichnend ist. Bei einer durch den Temperaturfühler 12 im Bereich des Heißgasauslasses 7 gemessenen Heizkammerauslasstemperatur von etwa 800°C und einer durch den Temperaturfühler 15 im Bereiche des Heißgaseinlasses 8 gemessenen Heizkammereinlasstemperatur von etwa 600°C, beträgt diese etwa 200°. Für eine Temperatur der aus der Brennereinrichtung 5 austretenden Verbrennungsgase von etwa 2000°C muß in dem Kreislauf 9 ein Heißgasmengenstrom umgewälzt werden, der etwa zehn mal so groß ist wie der in die Nachverbrennungskammer 3 eintretende Mengenstrom des Rohgases R .

Durch Verstellen des als Drosselorgan wirkenden Schiebers 13 können der in dem Kreislauf 9 umgewälzte Heißgasmengenstrom und damit auch die sich in der Heizkammer 2 ergebenden Mischtemperatur des Rohgases R beeinflußt werden. Die Regelmittel 11 halten durch entsprechende Betätigung des Schiebers 13 die von dem Temperaturfühler 12 gemessene Temperatur am Heizkammeraustritt auf einem vorbestimmten Sollwert.

Gleichzeitig regelt der Regler 14 die Energiezufuhr zu dem Rekuperatorbrenner der Brennereinrichtung 5 abhängig von der durch den Temperaturfühler 15 am Ausgang der Prozeßkammer 1 gemessenen Temperatur derart, daß die Prozeßkammertemperatur auf einem vorbestimmten Sollwert gehalten bleibt.

Während bei den beschriebenen Ausführungsformen das Drosselorgan mit dem Schieber 13 in dem Bereiche des Heißgasauslasses 7 von der Heizkammer 2 in die Prozeßkammer 1 angeordnet ist, kann es unter bestimmten Bedingungen auch vorzuziehen sein, das Drosselorgan in dem Bereiche des Heißgaseinlasses 8 von der Prozeßkammer 1 in die Heizkammer 2 oder unmittelbar in der Heizkammer 2 oder der Prozeßkammer 1 anzuordnen, auch Drosselorgane in Heißgasein- und -auslaß 8, 7 sind denkbar. Auch die Stellen, an denen die Temperaturüberwachung in den jeweiligen Kammern 1, 2 durch die Temperaturfühler 12, 15 erfolgt, können der jeweiligen Ausführungsform angepaßt, abweichend gewählt werden.

Die Brennereinrichtung 5 kann abhängig von der erforderlichen Heizleistung und den Gegebenheiten des Industrieofens auch mehrere, ggf. als Rekuperatorbrenner ausgebildete Brenner enthalten.

Die neue Heißgaserzeugungseinrichtung ist nicht auf die Verwendung bei Industrieöfen, z.B. Durchlauf-, Chargen- oder Retortenöfen beschränkt. Sie kann überall dort eigesetzt werden, wo bei thermischen Prozessen brennbare Schadstoffe enthaltende Abgase auftreten, die durch thermische Nachverbrennung unschädlich gemacht werden müssen. Beispiele hierfür sind Lackier- und Trocknungsanlagen, Röstanlagen, Einrichtungen zum Entölen von Metallspänen oder zum Ausbrennen von Formkernen in der Gießereitechnik usw.

## Patentansprüche

1. Heißgaserzeugungseinrichtung für wenigstens einen Wärmeverbraucher, der eine Prozeßkammer (1) zur Durchführung von thermischen Prozessen aufweist, bei denen gas-, dampf- oder partikelförmige organische Schadstoffe enthaltendes Abgas anfällt,
- mit einer zur Erzeugung von Heißgas dienenden Heizkammer (2), die eine sie direkt beheizende regelbare Brennereinrichtung (5) aufweist,
- mit einem mit der Prozeßkammer (1) verbundenen Heißgasauslaß (7) der Heizkammer (2) zur Zuführung von Heißgas in die Prozeßkammer (1),
- mit einer mit der Prozeßkammer (1) verbundenen Einrichtung zur Abführung von schadstoffbeladenem in der Prozeßkammer (1) abgekühltem Heißgas aus der Prozeßkammer (1), wobei durch die Heizkammer (2), deren Heizgasauslaß (7), die Prozeßkammer (1) und die Einrichtung für die Abführung des abgekühlten schadstoffbeladenen Heißgases aus der Prozeßkammer (1) ein Kreislauf (9) gebildet ist, über den eine vorbestimmte Heißgasmenge umwälzbar ist, und
- die Einrichtung zur Abführung des abgekühlten schadstoffbeladenen Heißgases aus der Prozeßkammer (1) einen Heißgaseinlaß (8) aufweist, der in der Heizkammer (2) mündet, und wobei in der Einrichtung das durch den Heißgaseinlaß einströmende, abgekühlte schadstoffbeladene Heißgas in der Heizkammer (2) sich mit den Verbrennungsgasen der Brennereinrichtung unter teilweiser Oxydation der Schadstoffe zu heißem Rohgas vermischt,
- mit einer Nachverbrennungskammer (3), die einen Reingasauslaß aufweist, an den ein primärseitig von schadstoffarmem Reingas und sekundärseitig von Zuluft durchströmter Wärmetauscher (6) angeschlossen ist, wobei
- (I) die Heizkammer (2) über einen Durchlaß (4) unmittelbar mit der Nachverbrennungskammer (3) verbunden ist, und
- a) ein erster Teil des Mengenstroms des Rohgases in der Heizkammer (2) als Heißgas durch den Heißgasauslaß in die Prozeßkammer (1) und ein zweiter Teil durch den Durchlaß (4) in die Nachverbrennungskammer (3) geleitet ist, und
- b) das Heißgas durch den von der Brennereinrichtung erzeugten Brennerimpuls auf dem Strömungsweg des Kreislaufes angetrieben ist und
- (II) das wirksame Volumen der Nachverbrennungskammer (3) derart bemessen ist, daß die Verweilzeit des durchströmenden Gasmengenstromes zur im wesentlichen vollständigen Nachverbrennung der Schadstoffe des Rohgases und dessen Umwandlung in Reingas ausreicht und
- (III) die Heißgaserzeugungseinrichtung Regelmittel (11, 12, 13) aufweist, die wenigstens ein den Heißgaskreislauf beeinflußendes Drosselorgan (13) aufweisen, wobei durch die Regelmittel wenigstens die Temperatur des Rohgases beim Eintritt in die Nachverbrennungskammer (3) auf einem vorbestimmten Sollwert gehalten ist.

2. Heißgaserzeugungseinrichtung nach Anspruch 1, **dadurch gekennzeichnet, daß** die Heizkammer (2) und die Nachverbrennungskammer (3) zu einer an die Prozeßkammer (1) ansetzbaren Baueinheit (21) zusammengefaßt sind, die den im Bereich der Brennereinrichtung (5) mündenden Heißgaseinlaß (8) und den in einem von diesem entfernt liegenden Bereich abgehenden Heißgasauslaß (7) aufweist.

3. Heißgaserzeugungseinrichtung nach Anspruch 2, **dadurch gekennzeichnet, daß** die Baueinheit (21) ein Gehäuse aufweist, das ein Formstück (23) beinhaltet, das, ggf. zusammen mit den Außenwänden des Gehäuses (210), wenigstens einen ersten (27), dem Heißgasauslaß (7) zugeordneten, und wenigstens einen zweiten (28), dem Heißgaseinlaß (8) zugeordneten Kanal begrenzt, und daß die Kanäle (26, 27) zur Verbindung der Heizkammer (2) mit der Prozeßkammer (1) eingerichtet sind.

4. Heißgaserzeugungseinrichtung nach Anspruch 1, **dadurch gekennzeichnet, daß** die Heizkammer (2) und die Nachverbrennungskammer (3) Teil eines Industrieofens und von dessen die Prozeßkammer (1) bildender Ofenkammer durch einen hitzebeständigen Trennboden (32) getrennt sind, der im Bereiche der Brennereinrichtung (5) den Heißgaseinlaß (7) in die Heizkammer (2) und in einem von diesem entfernt liegenden Bereich den Heißgasauslaß (8) aus der Heizkammer (2) für den Strömungsweg (9) der Heißgase aufweist oder begrenzt.

5. Heißgaserzeugungseinrichtung nach einem der vorhergehenden Ansprüche, **dadurch gekennzeichnet, daß** die Nachverbrennungskammer (3) von der Heizkammer (2) durch eine hitzebeständige Trennwand (29) getrennt ist, die in einem von der Brennereinrichtung (5) entfernt liegenden Bereiche den Durchlaß (4) für das unvollständig nachverbrannte Rohgas (R) aufweist oder begrenzt.

6. Heißgaserzeugungseinrichtung nach einem der vorhergehenden Ansprüche, **dadurch gekennzeichnet, daß** die Brennereinrichtung (5) und der Wärmetauscher (6) zu wenigstens einem Rekuperatorbrenner zusammengefaßt sind.

7. Heißgaserzeugungseinrichtung nach einem der vorhergehenden Ansprüche, **dadurch gekennzeichnet, daß** zusätzliche Umwälzmittel (19) im Kreislauf (9) der Heißgase angeordnet sind.

8. Heißgaserzeugungseinrichtung nach einem der vorhergehenden Ansprüche, **dadurch gekennzeichnet, daß** nach der Nachverbrennungskammer (3) Absaugmittel (18) im Strömungsweg der Reingase (A) angeordnet sind.

9. Heißgaserzeugungseinrichtung nach einem der vorhergehenden Ansprüche, dadurch gekennzeichnet, daß die Regelmittel wenigstens ein im Bereiche des Heißgasauslasses (7) oder des Heißgaseinlasses (8) und/oder des Rohgaseintrittes in die Nachverbrennungskammer (3) angeordnetes Temperaturfühlmittel (12).

## Claims

1. Hot gas generating system for at least one heat consumer, having a processing chamber (1) for carrying out the thermal treatment of processes, during which waste gas containing noxious organic substances in the form of gases, vapours or particles, is produced;
- having a combustion chamber (2) for generating hot gases, which has a controllable burner means (5) that directly heats said combustion chamber (2);
- having a hot gas outlet (7) connected to the processing chamber (1) for supplying hot gas into said processing chamber (1);
- having a means connected to the processing chamber (1) for carrying hot gas containing noxious substances cooled in said processing chamber (1) out of said processing chamber (1), whereby the combustion chamber (2), its hot gas outlet (7), the processing chamber (1) and said means for carrying the cooled hot gas containing noxious substances out of said processing chamber (1) form a gas cycling loop (9), through which a predetermined quantity of hot gas may be circulated; and said means for carrying the cooled hot gas containing noxious substances out of the processing chamber (1) has a hot gas inlet (8), which feeds into the combustion chamber (2), and in said means the cooled hot gas containing noxious substances in the combustion chamber (2) and flowing in through the hot gas inlet mixes with the combustion gases from the burner means, whereby the noxious substances are partly oxidised to form hot raw gas;
- having an after-burner chamber (3) with an outlet for clean gas, to which a heat exchanger (6) is connected which has clean gas low in noxious substances flowing through it on the primary side and incoming air flowing through it on the secondary side, wherein
- (I) the combustion chamber (2) is connected directly to the after-burner chamber (3) via a gas passage opening (4); and
- a) a first portion of the flow of raw gas in the combustion chamber (2) is passed as hot gas through the hot gas outlet into the processing chamber (1) and a second portion is passed through the gas passage opening (4) into the after-burner chamber (3); and
- b) the hot gas is passed along the flow path of the gas cycling loop by means of the burner pulse generated by the burner means; and
- (II) the effective volume of the after-burner chamber (3) is dimensioned such that the dwell time of the gas flowing therethrough is essentially sufficient to completely burn off the noxious substances in the raw gas and to convert it into clean gas; and
- (III) said hot gas generating system has control means (11, 12, 13) with at least one throttle means (13), said control means at least maintaining the temperature of the raw gas on entering the after-burner chamber (3) at a predetermined command level.

2. Hot gas generating system according to Claim 1, characterised in that the combustion chamber (2) and the after-burner chamber (3) together form a single structural unit (21) which may be coupled to the processing chamber (1), said structural unit (21) having the hot gas recirculating inlet (8) feeding into the area of the burner means (5) and the hot gas outlet (7) discharging in an area remote therefrom.

3. Hot gas generating system according to Claim 2, characterised in that the structural unit (21) has a housing including a shaped insert (23), which, possibly together with the outer walls of said housing structure (210), defines at least a first duct (27) allocated to the hot gas outlet (7) and at least a second duct (28) allocated to the hot gas recirculating inlet (8); and that said ducts (27, 28) are provided to connect the combustion chamber (2) to the processing chamber (1).

4. Hot gas generating system according to Claim 1, characterised in that the combustion chamber (2) and the after-burner chamber (3) form part of an industrial furnace and are separated from the chamber of said furnace forming the processing chamber (1) by a heat-resistant separating element (32), which in the area of the burner means (5) has or defines the hot gas inlet (7) into the combustion chamber (2) and, in an area remote therefrom, has or defines the hot gas outlet (8) out of the combustion chamber (2) for the flow path (9) of the hot gases.

5. Hot gas generating system according to one of the preceding claims, characterised in that the after-burner chamber (3) is separated from the combustion chamber (2) by a heat-resistant separating wall (29), which, in an area remote from the burner means (5), has or defines the gas passage opening (4) for the raw gas (R) which has not been completely burned off.

6. Hot gas generating system according to one of the preceding claims, characterised in that the burner means (5) and the heat exchanger (6) together form at least one recuperator burner unit.

7. Hot gas generating system according to one of the preceding claims, characterised in that additional circulation means (19) are provided in the hot gas cycling loop (9).

8. Hot gas generating system according to one of the preceding claims, characterised in that suction means (18) are arranged in the flow path of the clean gases (A) downstream of the after-burner chamber (3).

9. Hot gas generating system according to one of the preceding claims, characterised in that the control means have at least one temperature sensing element (12) arranged in the area of the hot gas outlet (7) or the hot gas inlet (8) and/or the raw gas entry point into the after-burner chamber (3).

## Revendications

1. Dispositif de production de gaz chaud pour au moins un utilisateur de chaleur qui présente une chambre de traitement (1) pour la mise en oeuvre de procédés utilisant de la chaleur, dans lesquels des fumées contenant des substances polluantes sous forme de gaz, de vapeurs ou de particules sont produites, comportant
- une chambre de chauffage (2) servant à la production de gaz chaud qui présente un système de brûleur (5) réglable assurant le chauffage direct de ladite chambre,
- une sortie de gaz chaud (7) de la chambre de chauffage (2) reliée à la chambre de traitement (1) pour amener du gaz chaud dans la chambre de traitement (1),
- un dispositif communiquant avec la chambre de traitement (1) pour l'évacuation hors de la chambre de traitement (1) le gaz chaud chargé de substances polluantes qui s'est refroidi dans ladite chambre, la chambre de chauffage (2), la sortie de gaz chaud (7) de celle-ci, la chambre de traitement (1) et le dispositif pour l'évacuation hors de la chambre de traitement (1) du gaz chaud refroidi et chargé de substances polluantes formant un circuit (9) par l'intermédiaire duquel une quantité prédéterminée de gaz chaud peut être mise en circulation,
- le dispositif pour l'évacuation hors de la chambre de traitement (1) du gaz chaud refroidi et chargé de substances polluantes présentant une entrée de gaz chaud (8) qui débouche dans la chambre de chauffage (2) et, à l'intérieur du dispositif, le gaz chaud refroidi et chargé de substances polluantes qui arrive par l'entrée de gaz chaud (8) se mélangeant dans la chambre de chauffage (2) avec les gaz de combustion du système de brûleur une oxydation partielle des substances polluantes ayant lieu pour former du gaz brut chaud,
- une chambre de post-combustion (3) qui présente une sortie de gaz pur à laquelle est connecté un échangeur de chaleur (6) parcouru, côté primaire, par le gaz pur peu chargé en substances polluantes et, côté secondaire, par de l'air d'alimentation,
dispositif dans lequel
- (I) la chambre de chauffage (2) est reliée directement à la chambre de post-combustion (3) par l'intermédiaire d'un passage (4) et
- a) une première partie du débit de gaz brut contenu dans la chambre de chauffage (2) est amenée en tant que gaz de chauffage dans la chambre de traitement (1) par l'intermédiaire de la sortie de gaz chaud et une deuxième partie est amenée dans la chambre de post-combustion (3) par l'intermédiaire du passage (4) et
- b) le gaz chaud est entraîné sur le trajet du circuit par l'impulsion produite par le système de brûleur et
- (II) le volume efficace de la chambre de post-combustion (3) est dimensionné de manière telle que le temps de séjour du débit de gaz qui la traverse soit suffisant pour permettre la combustion sensiblement complète des substances polluantes et leur transformation en gaz pur et
- (III) le dispositif de production de gaz chaud présente des moyens de régulation (11, 12, 13) qui comportent au moins un organe d'étranglement (13) agissant sur le circuit de gaz chaud, au moins la température du gaz brut, à son entrée dans la chambre de post-combustion (3), étant maintenue à une valeur de consigne prédéterminée par les moyens de réglage.

2. Dispositif de production de gaz chaud selon la revendication 1, caractérisé par le fait que la chambre de chauffage (2) et la chambre de post-combustion (3) sont regroupées en une unité de construction (21) qui peut être rattachée à la chambre de traitement (1) et et qui présente l'entrée de gaz chaud (8) débouchant dans la région du système de brûleur (5) et la sortie de gaz chaud (7) raccordée dans une région éloignée dudit système de brûleur.

3. Dispositif de production de gaz chaud selon la revendication 2, caractérisé par le fait que l'unité de construction (21) présente une carcasse qui contient une pièce moulée (23) qui, le cas échéant avec les parois extérieures de la carcasse (210), délimite au moins un premier conduit (27) associé à la sortie de gaz chaud (7) et au moins un deuxième conduit (26) associé à l'entrée de gaz chaud (8) et par le fait que les conduits (26, 27) sont agencés pour relier la chambre de chauffage (2) à la chambre de traitement (1).

4. Dispositif de production de gaz chaud selon la revendication 1, caractérisé par le fait que la chambre de chauffage (2) et la chambre de post-combustion (3) font partie d'un four industriel et sont séparées de la chambre du four qui constitue la chambre de traitement (1) par l'intermédiaire d'un fond (32) réfractaire qui, dans la région du système de brûleur (5) présente ou délimite l'entrée de gaz chaud (7) dans la chambre de chauffage (2) et, dans une région éloignée du système de brûleur, présente ou délimite la sortie de gaz chaud (8) de la chambre de chauffage (2) pour la circulation (9) des gaz chauds.

5. Dispositif de production de gaz chaud selon l'une des revendications précédentes, caractérisé par le fait que la chambre de post-combustion (3) est séparée de la chambre de chauffage (2) par une cloison (29) réfractaire qui, dans une région éloignée du système de brûleur (5) présente ou délimite le passage (4) pour le gaz brut (R) incomplètement brûlé.

6. Dispositif de production de gaz chaud selon l'une des revendications précédentes, caractérisé par le fait que le système de brûleur (5) et l'échangeur de chaleur (6) sont regroupés en au moins un brûleur à récupération.

7. Dispositif de production de gaz chaud selon l'une des revendications précédentes, caractérisé par le fait que des moyens de circulation (19) supplémentaires sont disposés dans le circuit (9) des gaz chauds.

8. Dispositif de production de gaz chaud selon l'une des revendications précédentes, caractérisé par le fait que des moyens d'extraction (18) sont disposés sur le trajet des gaz purs (A), derrière la chambre de post-combustion (3).

9. Dispositif de production de gaz chaud selon l'une des revendications précédentes, caractérisé par le fait que les moyens de régulation présentent au moins un capteur de température (12) disposé dans la région de la sortie de gaz chaud (7) ou de l'entrée de gaz chaud (8) et/ou de l'entrée de gaz brut dans la chambre de post-combustion (12).
